# EUROPEAN PATENT APPLICATION

(11) **EP 2 665 018 A1**
(43) Date of publication of application: **20.11.2013**
(21) Application number: 12305534.5
(22) Date of filing: 14.05.2012
(51) Int. Cl.: G06K 9/46

(54) **Object identification in images or image sequences**

(71) Applicant: Thomson Licensing, 92130 Issy-les-Moulineaux (FR)
(72) Inventor: Winter, Marco, 30659 Hannover (DE); Putzke-Roeming, Wolfram, 31137 Hildesheim (DE); Jachalsky, Joern, 30974 Wennigsen (DE)
(74) Representative: Schmidt-Uhlig, Thomas

(57) **Abstract**

A solution for identifying an object in an image or a sequence of images is described. A segmenter separates (10) a first image into superpixels. A set of grouped superpixels is determined (11) from these superpixels by an analyzer or by a user input via a user interface. The set of grouped superpixels is sent (12) to a search engine, which returns (15) the results of a search performed (14) by the search engine on the set of grouped superpixels.

## Description

The present invention is related to a method and an apparatus for identifying an object in an image or in a sequence of images. More particularly, the invention is related to a method and an apparatus for identifying an object in an image or in a sequence of images, which makes use of superpixels.

A number of approaches exist to identify objects in 2D or 3D video sequences or in single images. For example, face recognition is state of the art for compact cameras, i.e. it is already implemented as a real-time application for low performance CPUs. However, all these algorithms are usually dedicated to specific applications. More general approaches typically require very sophisticated algorithms and an increased processing power.

It is hence an object of the present invention to propose a simplified and less demanding solution for identifying an object in an image or in a sequence of images.

According to the invention, this object is achieved by a method for identifying an object in an image or a sequence of images, which comprises the steps of:
- segmenting a first image into superpixels;
- determining a set of grouped superpixels;
- sending the set of grouped superpixels to a search engine; and
- receiving results of a search performed by the search engine on the set of grouped superpixels.

Similarly, an apparatus for identifying an object in an image or a sequence of images comprises:
- a segmenter for segmenting a first image into superpixels;
- an analyzer or a user interface for determining a set of grouped superpixels; and
- an interface for sending the set of grouped superpixels to a search engine and for receiving results of a search performed by the search engine on the set of grouped superpixels

The solution according to the invention combines two different approaches to identify an object in a 2D or 3D or multi-view image sequence or in a single image. First the one or more images are segmented into superpixels. Then either the user marks those superpixels which shall be investigated further, or a set of grouped superpixels belonging to an object is automatically detected. The automatic detection is based, for example, on a temporal analysis of the superpixels in case of a sequence of images, on a spatial analysis of the two or more images of a set of stereoscopic or multi-view images, or on other image analysis procedures. In any case, once the set of superpixels to be identified is known, a list of characteristics of this set of superpixels is built. These characteristics are sent as a query to a special superpixel object database, which determines the most appropriate object for these characteristics. The identified type of object is then sent back to the user. The invention makes use of the finding that most objects have a characteristic set of superpixels. It is thus possible to identify an object in an image or an image sequence based on the superpixels. As databases are continuously getting larger and all-embracing, the growing search engine power enables a convenient object search tool for set-top boxes, smartphones, tablets similar devices.

Advantageously, additional information is sent to the superpixel object database, e.g. metadata about the image or the sequence of images containing the object to be identified.

An example of such metadata are the title of a movie, a list of actors in the movie or the like. These additional metadata help to stabilize the classification, as they will to a certain extent exclude incorrect classifications. Also the temporal movement of the observed object may be analyzed and transmitted to the database to improve the search results.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: depicts an original image;
- Fig. 2: shows a human-marked segmentation of the image of Fig. 1;
- Fig. 3: depicts superpixels derived from the image of Fig. 1;
- Fig. 4: shows a reconstruction of the human-marked segmentation of Fig. 2 using the superpixels of Fig. 3;
- Fig. 5: depicts an image of a zebra with a number of superpixels marked by a user;
- Fig. 6: shows an enlarged fraction of Fig. 5 with the superpixels marked by the user;
- Fig. 7: shows an image of a fish segmented into superpixels;
- Fig. 8: shows an image of a building segmented into superpixels;
- Fig. 9: schematically illustrates a method according to the invention for object identification; and
- Fig. 10: schematically depicts an apparatus according to the invention for object identification.

The generation of superpixels, or rather superpixel maps, and their use for object recognition is at present under consideration for image processing. For example, the article X. Ren et al.: "Learning a Classification Model for Segmentation", 9th IEEE International Conference on Computer Vision (ICCV 2003), pp. 10-17, describes oversegmentation of an image into superpixels to reduce the complexity of images.

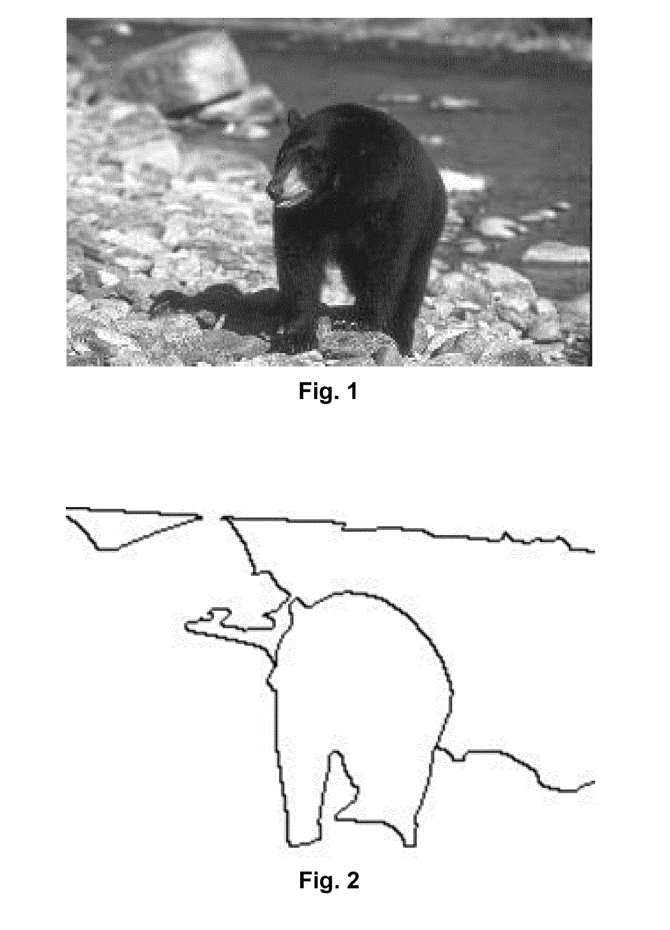

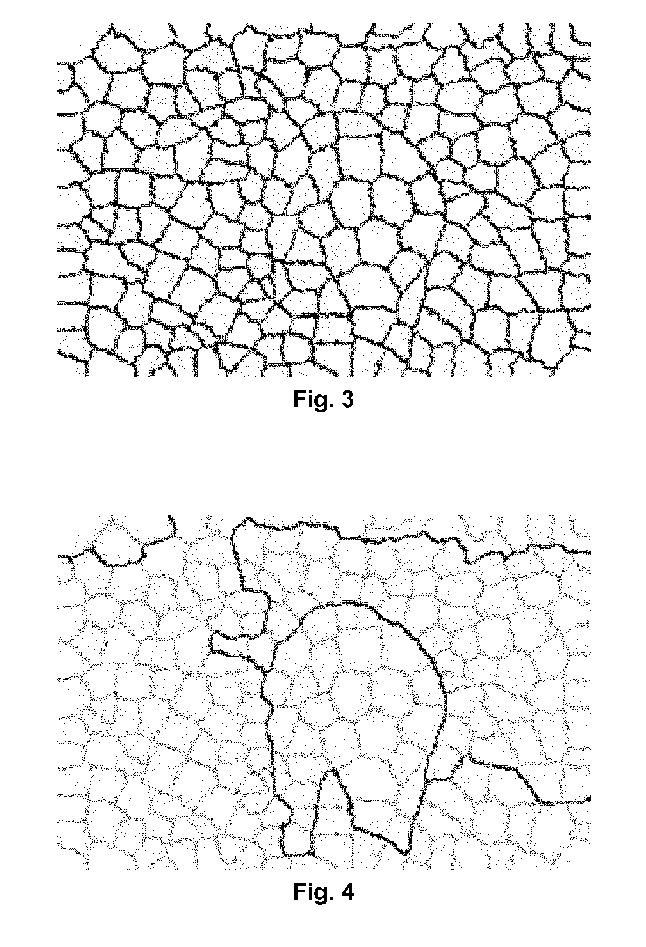

Figs. 1 to 4, which are taken from the above article by X. Ren et al., shown an example of an image segmented into superpixels. While Fig. 1 depicts the original image, Fig. 2 shows a human-marked segmentation of this image. Fig. 3 depicts a segmentation of the image into 200 superpixels obtained by applying a Normalized Cuts algorithm. Fig. 4 is a reconstruction of the human segmentation of Fig. 2 from the superpixels of Fig. 3. For this purpose each superpixel is assigned to a segment of Fig. 2 with the maximum overlapping area and the superpixel boundaries are extracted.

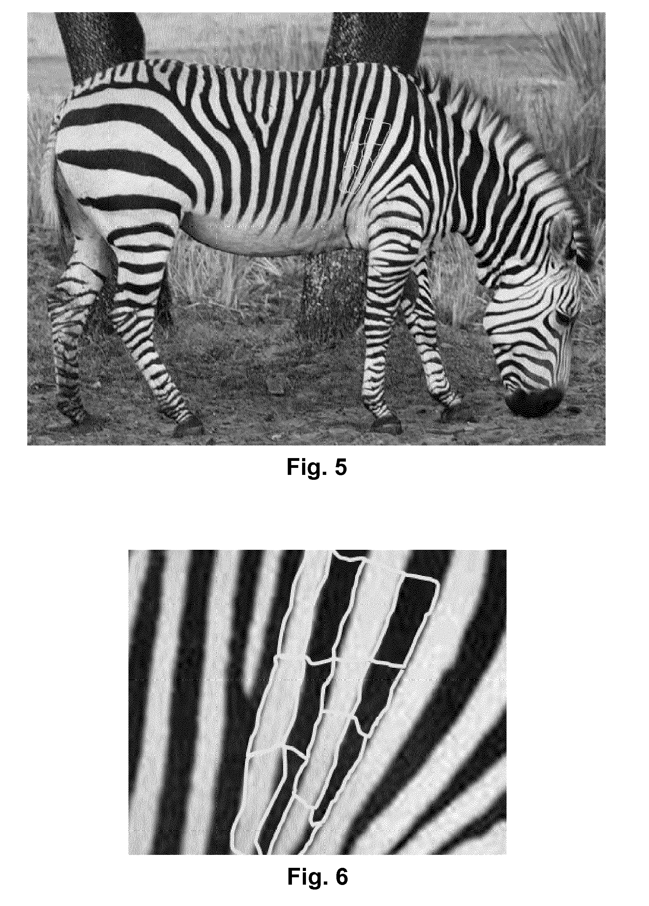

Fig. 5 depicts an image of a zebra with a number of superpixels marked by a user. An enlarged fraction of this image, in which the marked superpixels are visible more clearly, is depicted in Fig. 6.

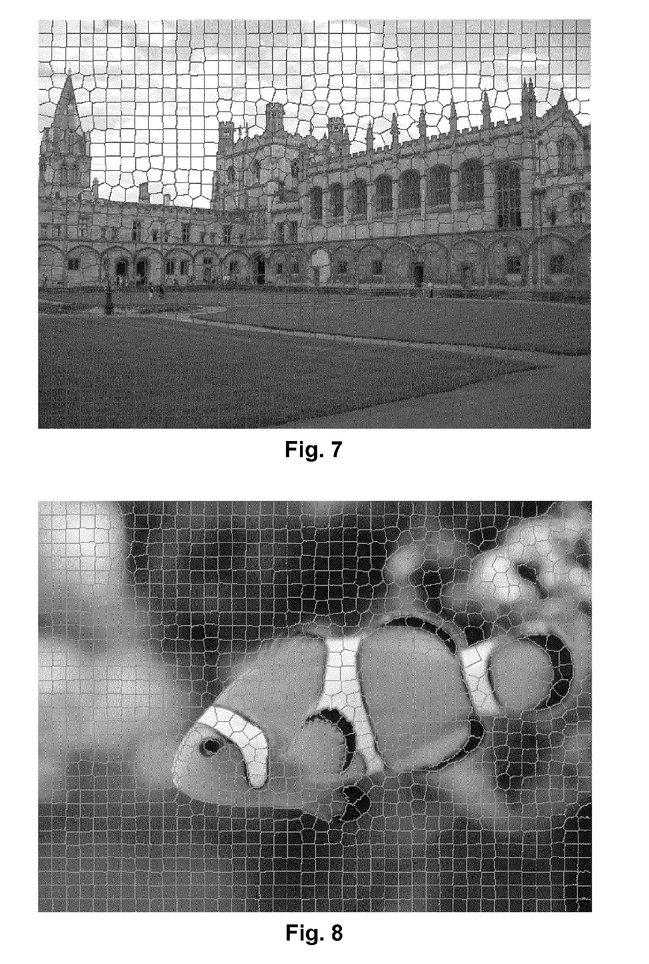

Further examples of images that are segmented into superpixels are illustrated in Figs. 7 and 8, which show an image of a fish and an image of a building, respectively.

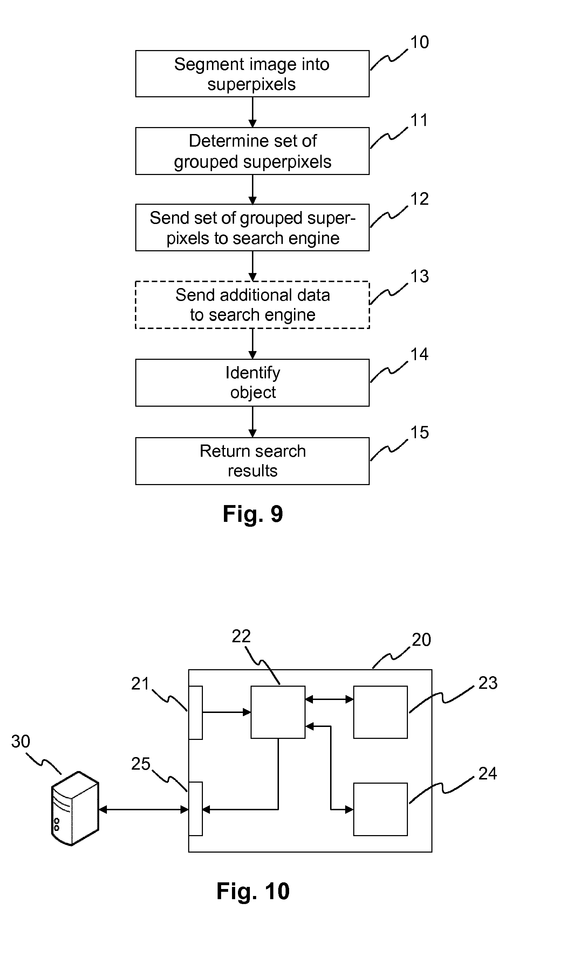

A method according to the invention is schematically illustrated in Fig. 9. Large databases are omnipresent today. For example, internet search engines base on a huge amount of very powerful databases on server farms around the world. The available search technologies enable to implement a powerful object recognition even for consumer set-top boxes, smartphones, tablet computers, etc. For this purpose in a first step an image is separated or segmented 10 into superpixels. The user then selects 11 a group of superpixels belonging to an object, as seen in Figs. 5 and 6, or the device itself automatically determines a set of grouped superpixels. The device then sends 12 the grouped superpixels to a search engine. Optionally, the device sends 13 additional metadata or other data about the image, e.g. whether it is part of a specific movie, etc. The search engine then identifies 14 the object described by the grouped superpixels using a database search. The result is grouped and sent 15 back to the device.

An apparatus 20 according to the invention is shown in Fig. 10. The apparatus 20 comprises an input 21 for receiving an image or an image sequence. A segmenter 22 separates an image into superpixels. An analyzer 23 determines a set of grouped superpixels. Alternatively, the user is able to select a group of superpixels belonging to an object via a user interface 24. An interface 25 is provided for sending the grouped superpixels to a search engine 30 and for receiving the results of the search obtained by the search engine 30.

The search result may cover different types of information, such as a coarse classification of the object (e.g. animal); a more specific classification (e.g. zebra); an alternative classification (e.g. quagga); where this object is seen elsewhere in the currently viewed movie (i.e. time stamps); or other movies with such an object (e.g. other movies with Humphrey Bogart). Together with the classification a probability value of the classification may also be provided.

A huge variety of different different objects may be detected, such as faces of actors; types of animals; names of famous castles or buildings; the address of a house in a broadcast film or documentation or news, etc., by marking the front view of the house; car types; movie titles, e.g. by marking parts of the final credits of a movie; special signs of towns, vehicle registration plates, signs on buildings, etc. to identify a location; paintings and other objects of art, e.g. a statue; brands of products, e.g. to obtain additional information about the products; tree type, leaf type, fruit type etc.; bottle type, e.g. to identify a type of wine.

Different approaches are used to support the search. The device preferably optimizes the superpixel generation by taking care of the temporal movements of the objects. For this purpose the boundaries of the superpixels preferably coincide with object boundaries. This simplifies the object selection. However, it is not necessary to have a perfect "cut" of the objects, i.e. it is less relevant whether a marked face is encircled by hair or not. The movement of the grouped superpixels may have characteristic behavior, which helps to identify the type of object. For example, a car moves differently than a human, a human differently than an antelope, an antelope differently than an eagle, etc. In addition, the type of movement may give a hint on the state of the object, e.g. whether an antelope is running, standing, eating, or lying down. This analysis is advantageously performed by the device and sent as metadata to the search engine.

## Claims

1. A method for identifying an object in an image or a sequence of images, the method comprising the steps of:
- segmenting (10) a first image into superpixels;
- determining (11) a set of grouped superpixels;
- sending (12) the set of grouped superpixels to a search engine (30); and
- receiving (15) results of a search performed (14) by the search engine (30) on the set of grouped superpixels.

2. The method according to claim 1, wherein the set of grouped superpixels is determined by a user input or by an analysis of the superpixels.

3. The method according to claim 2, wherein the analysis of the superpixels comprises analyzing a relative shift between superpixels of the first image and corresponding superpixels of a second image.

4. The method according to claim 3, wherein the first image and the second image are temporally adjacent images of a sequence of images or spatially adjacent images of a set of stereoscopic or multi-view images.

5. The method according to one of claim 1 to 4, wherein additional data about the image are sent (13) to the search engine (30).

6. An apparatus (20) for identifying an object in an image or a sequence of images, the apparatus (20) comprising:
- a segmenter (22) for segmenting (10) a first image into superpixels;
- an analyzer (23) or a user interface (24) for determining (11) a set of grouped superpixels; and
- an interface (25) for sending (12) the set of grouped superpixels to a search engine (30) and for receiving (15) results of a search performed (14) by the search engine (30) on the set of grouped superpixels.
